# EUROPÄISCHE PATENTSCHRIFT

(11) **EP 0 921 899 B1**
(45) Veröffentlichungstag und Bekanntmachung des Hinweises auf die Patenterteilung: **22.03.2000**
(21) Anmeldenummer: 97934556.8
(22) Anmeldetag: 30.07.1997
(51) Int. Cl.: B23Q 1/26, B23Q 1/00

(54) **FÜHRUNGSGESTELL**
GUIDING FRAME
CHASSIS DE GUIDAGE

(30) Priorität: 07.08.1996 DE 29613666 U
(43) Veröffentlichungstag der Anmeldung: 16.06.1999
(73) Patentinhaber: Rixen, Wolfgang, Dipl.-Ing., 42699 Solingen (DE); Pies, Gerrit, 42699 Solingen (DE)
(72) Erfinder: Rixen, Wolfgang, Dipl.-Ing., 42699 Solingen (DE); Pies, Gerrit, 42699 Solingen (DE)
(74) Vertreter: Eichler, Peter, Dipl.-Ing.
(86) Internationale Anmeldenummer: EP9704145
(87) Internationale Veröffentlichungsnummer: WO9805469

(56) Entgegenhaltungen:
- DE-A- 2 145 524
- DE-A- 3 132 869
- DE-B- 1 247 077
- US-A- 3 650 166
- US-A- 5 308 167

## Beschreibung

Die Erfindung bezieht sich auf ein Führungsgestell, mit einem Befestigungsnuten aufweisenden Träger, der mindestens eine an einer Befestigungsnut befestigte trägerparallele und im wesentlichen rechteckige Führungsschiene trägt, an der ein ein Schlittenteil führendes Führungslager abgestützt ist.

Der bei derartigen Führungsgestellen eingesetzte Träger besteht aus einem im Querschnitt quadratischen oder rechtekkigen Hohlprofil aus beispielsweise Aluminiumlegierung. Der Außenumfang des Trägers weist hinterschnittene Befestigungsnuten auf, sogenannte T-Nuten. Mit Hilfe dieser Befestigungsnuten können an dem Träger Bauteile befestigt werden, um Maschinengestelle, Raumeinbauten oder dergleichen herzustellen. Es ist allgemein bekannt, an einem Träger eine Führungsschiene zu befestigen, auf der ein Führungslager schienenlängsbeweglich ist, welches ein längszuverstellendes Bauteil abstützt, beispielsweise eine Schlittenplatte, die beispielsweise für eine Bearbeitungsaufgabe genau positioniert werden muß. Beispielsweise eine Verkippung der Schlittenplatte würde dazu führen, daß ein Werkstück oder ein Werkzeug ungenau positioniert wird und die in der betreffenden Position erfolgende Bearbeitung ein ungenaues Ergebnis hat. Es ist auch allgemein bekannt, an solchen Trägern zwei einander parallele Führungsschienen zu befestigen, auf denen sich Führungslager längsbeweglicher Schlitten abstützen. Ein Führungslager der einen Führungsschiene ist mit einem Führungslager der anderen Führungsschiene durch eine Schlittenplatte oder dergleichen starr verbunden. Als Führungslager werden Rollenlagerungen eingesetzt, deren Rollenkörper auf den Führungsschienen abrollen. Derartige Führungsgestelle sind für Schlitten mit geringeren bis mittleren Belastungen geeignet. Sie eignen sich jedoch weniger für hochgenaue Positionierungsaufgaben, beispielsweise für Werkzeug- oder Werkstückschlitten. Hochgenaue Positionierungen müssen erreicht werden, um entsprechend präzise Bearbeitungen an Werkstücken vornehmen zu können. Hierzu ist es allgemein bekannt, Kugelhülsen auf Wellen bzw. in Querschnitt runden Führungsschienen einzusetzen. Dazu bedarf es jedoch besonderer Profilquerschnitte von Hohlprofilstücken oder anderer Befestigungsmittel, in die die Kugelhülsen eingebaut werden.

Aus der DE-A-31 32 869 ist ein Führungsgestell mit einem Träger bekannt, der zwei an ihm befestigte trägerparallele und im wesentlichen rechteckige Führungsschienen trägt, an denen ein ein Schlittenteil führendes Führungslager abgestützt ist. Dieses Lager ist ein Rollenlager mit Außenrollring.

Dem Bekannten gegenüber liegt der Erfindung die Aufgabe zugrunde, ein Führungsgestell mit den eingangs genannten Merkmalen so zu verbessern, daß es für hochgenaue Positionierungsaufgaben auch schwerer Lasten von insbesondere Werkzeug- und/oder Werkstückschlitten geeignet ist.

Diese Aufgabe wird dadurch gelöst, daß die im wesentlichen rechteckige Führungsschiene auf die hinterschnittene Befestigungsnut begrenzenden Trägerkanten oder auf einem die hinterschnittene Befestigungsnut überbrückenden Zwischenlagerstück ballig abgestützt ist.

Für die Erfindung ist zunächst von Bedeutung, daß das Führungsgestell mit einer im wesentlichen rechteckigen Führungsschiene ausgerüstet wird. Diese kann in herkömmlicher Weise an der ebenen Außenwand des Trägers befestigt werden. Die Befestigung erfolgt z.B. durch Verschraubung unter Zuhilfenahme der hinterschnittenen Befestigungsnuten. Rechteckige Führungschienen haben aber den erheblichen Nachteil, daß sie torsionssensibel sind. Infolge ihrer Herstellung oder infolge ihrer Befestigung an dem Träger kommt es insbesondere bei zwei oder mehr einander parallelen Führungsschienen dazu, daß die tordierten Führungsschienen beim Verschieben des Schlittens bzw. beim Verschieben der Führungslager des Schlittens letztere entsprechend zu tordieren versuchen. Entsprechend unterschiedlicher Tordierungen der Führungsschienen kommt es zu Verklemmungen, so daß der Schlitten nicht mehr bewegt werden kann. Zu Verklemmungen kann es auch dadurch kommen, daß sich Systemtoleranzen auswirken. Alle Systemteile sind toleranzbehaftet. Das gilt insbesondere auch für den Träger und/oder etwaige Schlittenbauteile, insbesondere wenn sie aus stranggepreßtem Hohlprofil bestehen. Träger und Schlittenteile aus Hohlprofil sind häufig mit schwacher Konkavität ihrer zwischen den Kanten gelegenen Flächen ausgebildet, beispielsweise um den gewünschten festen Sitz eines mit seiner Stirnseite an eine solche konkave Fläche mit seiner Stirnseite angeschlossenen Hohlprofils zuverbessern. Derartige Konkavitäten sind äußerst gering, können aber doch zu Schiefstellungen der Schlittenteile und/oder der Führungslager führen und damit zu Verklemmungen. Auch die Montage des Trägers innerhalb des Führungsgestells kann zu Tordierungen und/oder Schiefstellungen führen, was entsprechende Verklemmungsgefahr mit sich bringt. Die Verklemmungsgefahr ist insbesondere dann groß, wenn das Führungsgestell mit geringen Toleranzen hergestellt werden muß, um die gewünschten Positionierungsgenauigkeiten zu erreichen.

Es kann vorteilhaft sein, das Führungsgestell so auszubilden, daß zwei oder mehr einander parallele Führungsschienen vorhanden sind, die je ein Führungslager aufweisen, die miteinander starr verbunden sind, und von denen mindestens eine über eine Balligkeit an mindestens einem Träger befestigt ist. Dabei ist es von weiterer erheblicher Bedeutung für die Erfindung, daß mindestens eine Führungsschiene ballig abgestützt ist. Infolge der Balligkeit kann der Sitz der Führungsschiene am Träger korrigiert werden. Diese Korrektur erfolgt bei der Montage der Führungsschiene am Träger mit Hilfe des Schlittens derart, daß dieser mit zulässigem Bewegungswiderstand auf dem Führungsgestell bewegt werden kann.

Eine sehr einfache Ausgestaltung der Führungsschiene ist gegeben, wenn sich diese mit ihren balligen Bereichen auf den die Befestigungsnut bildenden Trägerkanten abstützen kann. Es ist dann lediglich erforderlich, die Führungsschiene mit einer Balligkeit auszubilden, was mit begrenztem Herstellungsaufwand möglich ist. Außer der direkten Abstützung der Führungsschiene auf dem Träger ist auch die indirekte Abstützung möglich, und zwar über ein Zwischenlagerstück. Dieses Zwischenlagerstück überbrückt die Befestigungsnut, stützt sich also auf der ebenen Außenfläche des Trägers ab. Führungsschienenseitig ist es ballig ausgebildet und ermöglicht die erforderliche torsionssensible Montage der Führungsschiene.

Das Führungsgestell kann so ausgebildet werden, daß die Führungsschiene im Bereich der Trägerkanten kreisförmig ballig ausgebildet ist. Die Positionierbarkeit der Führungsschiene auf dem Träger ist dann optimal und unabhängig vom Torsionswinkel. Außerdem ist die Herstellbarkeit vereinfacht.

Um die Flächenpressung zwischen dem Träger und der Führungsschiene herabzusetzen, kann das Führungsgestell so ausgebildet werden, daß die Trägerkanten mit im Vergleich zu anderen Kantenradien des Trägers vergrößerten Kantenradien versehen sind.

In besonders hohem Maße wird die Flächenpressung zwischen den Trägerkanten des Trägers und der Führungsschiene verringert, wenn die Trägerkanten konkav ausgebildet sind. In beiden vorbeschriebenen Fällen ist der Herstellungsaufwand gering, weil sowohl die vergrößerten Kantenradien als auch die konkave Ausbildung der Trägerkanten zugleich mit dem Herstellen des Trägers durch Strangpressen erfolgen kann, wenn beispielsweise Träger aus strangpreßbarer Aluminiumlegierung eingesetzt werden.

Das Führungsgestell kann so weitergebildet werden, daß die Führungsschiene kreiszylindrisch ballig in einer entsprechend kreiszylindrisch balligen Vertiefung des Zwischenlagerstücks abgestützt ist. Die Führungsschiene ist dementsprechend einstückig und kann sich gelenkig in der entsprechend balligen Vertiefung des Zwischenlagerstücks abstützen. Es sind vergleichsweise große relative Verdrehungen zwischen der Führungsschiene und dem Zwischenlagerstück bzw. dem Träger möglich. Die dabei zur Wirkung kommenden Abstützflächen zwischen der Führungsschiene und dem Zwischenlagerstück sind groß und die spezifischen Flächenpressungen mithin klein. Das Zwischenlagerstück kann den Festigkeitsbedürfnissen entsprechend großflächig ausgebildet werden, auch trägerseitig.

Wenn die trägerseitige ballige Ausbildung der Führungsschiene vermieden werden soll, kann das Führungsgestell so ausgebildet werden, daß die Führungsschiene trägerseitig eben ausgebildet ist und mit einer separaten Abstützleiste ballig am Zwischenlagerstück abgestützt ist. Es können dann herkömmliche rechteckige Führungsschienen eingesetzt werden. Der Torsionsausgleich erfolgt zwischen der separaten Abstützleiste und dem Zwischenlagerstück unter der Voraussetzung, daß die Abstützleiste und die Führungsschiene relativ unbeweglich gekuppelt sind.

Zweckmäßigerweise weist das Zwischenlagerstück einen Nuteneingriffsvorsprung auf, so daß es insbesondere bei der Torsionseinstellung der Führungsschiene relativ unbeweglich am Träger angeordnet ist.

Besondere Bedeutung haben die vorbeschriebenen Ausführungsformen des Führungsgestells, wenn die Führungslager als Geradführungslager ausgebildet sind. Geradführungslager sind in besonderer Weise empfindlich gegen Torsionen der Führungsschiene, weil sie sich in Längsrichtung über einen wesentlichen Längenabschnitt erstrecken und selbst torsionsmäßig toleranzarm ausgebildet sind. Die Kombination von Geradführungslagern und Führungsgestellen der vorbeschriebenen Ausführungsformen mit insbesondere rechteckigen Führungsschienen erlaubt daher die volle Nutzung der Vorteile der Geradführungslager.

Des weiteren ist es vorteilhaft, das Führungsgestell so auszubilden, daß die Führungslager mit Befestigungsschrauben an sie starr verbundenen Schlittenteilen befestigt sind, und daß die Köpfe dieser Befestigungsschrauben in Nuten der Schlittenteile eingreifen. Führungslager sind infolgedessen mit einfachen Mitteln an ihren zugehörigen Schlittenteilen zu befestigen. Es ist grundsätzlich nicht erforderlich, ein besonderes Zwischenstück zu verwenden, um sie mit den Schlittenteilen zu verbinden, z.B. mit einer starren Platte.

Dabei ist es in besonderer Weise vorteilhaft, das Führungsgestell so auszubilden, daß die Führungslager Befestigungsschrauben aufnehmende Gewindebohrungen aufweisen, die achsparallel zu Befestigungsbohrungen der jeweils zugehörigen Führungschiene angeordnet sind. Die Befestigung der Führungslager bzw. die Anordnung der Gewindebohrung eines Führungslagers erfolgt mithin in einem Bereich, der für die Anordnung von Lagerkörpern des Lagers nicht benötigt wird, beispielsweise für die Anordnung von Kugeln oder Rollen.

In spezieller Weise kann das Führungsgestell so ausgebildet werden, daß die Führungsschiene beidseitig ihrer balligen Ausbildung mit trägerflächenparallelen Abstützflächen versehen ist. Mit Hilfe der trägerflächenparallelen Abstützflächen ist es möglich, die Führungsschiene auch dann einzusetzen, wenn ihre Balligkeit nicht benötigt wird. Es ist dann lediglich erforderlich, die Oberfläche des Trägers soweit auszunehmen, daß die Balligkeit untergebracht werden kann, während sich die trägerflächenparallelen Abstützflächen auf der Trägeraußenwand abstützen. Wird die Ausnehmung für die Balligkeit der Führungsschiene genügend weit ausgebildet, kann die Führungsschiene quer zu ihrer Längsachse versetzt werden, was bei der Justierung zweier paralleler Führungsschienen von Vorteil ist, falls die Balligkeit einer der Führungsschienen ausreicht, um das Torsionsproblem zu lösen.

Die Erfindung wird anhand von in der Zeichnung dargestellten Ausführungsbeispielen erläutert. Es zeigt:
- Fig.1: ein Führungsgestell, bei dem zwei einander parallele Führungsschienen der Längsführung eines plattenförmigen Schlittenteils dienen,
- Fig.2: ein Führungsgestell für ein plattenförmiges Schlittenteil, das an zwei einander parallelen Flächen eines Trägers mittels Führungsschienen geführt ist,
- Fig.3: ein Führungsgestell mit winkelförmig angeordneten Schlittenteilen, die an zwei Führungsschienen geführt sind, welche an zueinander im Winkel stehenden Flächen eines Trägers befestigt sind,
- Fig.4: eine vergrößerte Querschnittsdarstellung einer Führungsschiene und der sie umgebenden Bereiche eines Führungslagers und eines Trägers,
- Fig.5,6: der Fig.4 entsprechende Darstellungen einer Führungsschiene, die jedoch über ein Zwischenlagerstück an dem Träger abgestützt ist.

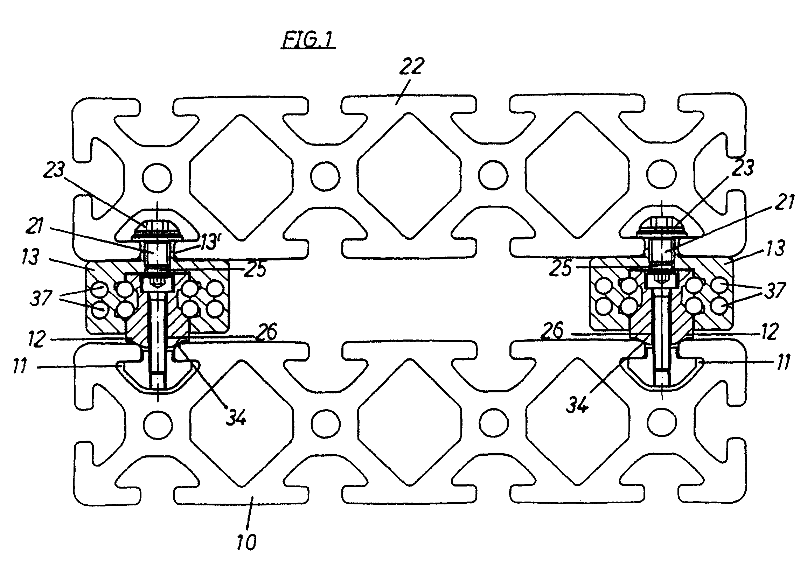

Das in den Figuren 1 bis 3 dargestellte Führungsgestell besteht im wesentlichen aus einem Träger 10, der z.B. über nicht dargestellte Stützen hochgehalten ist oder sonst wie in ein Maschinengestell integriert ist. Jeder Träger ist in an sich bekannter Weise mit hinterschnittenen Befestigungsnuten 11 versehen, die je nach Querschnittsgestaltung des Trägers 10 in unterschiedlicher Anzahl vorhanden und gleichmäßig über den Umfang des Trägers 10 verteilt sind.

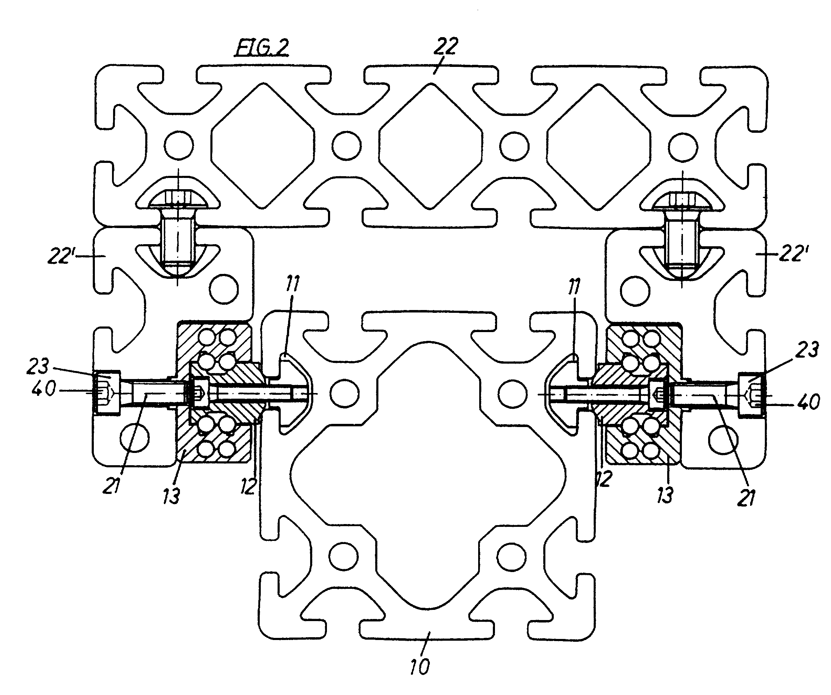

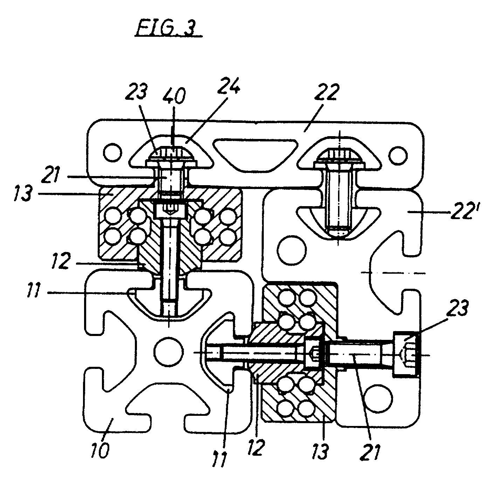

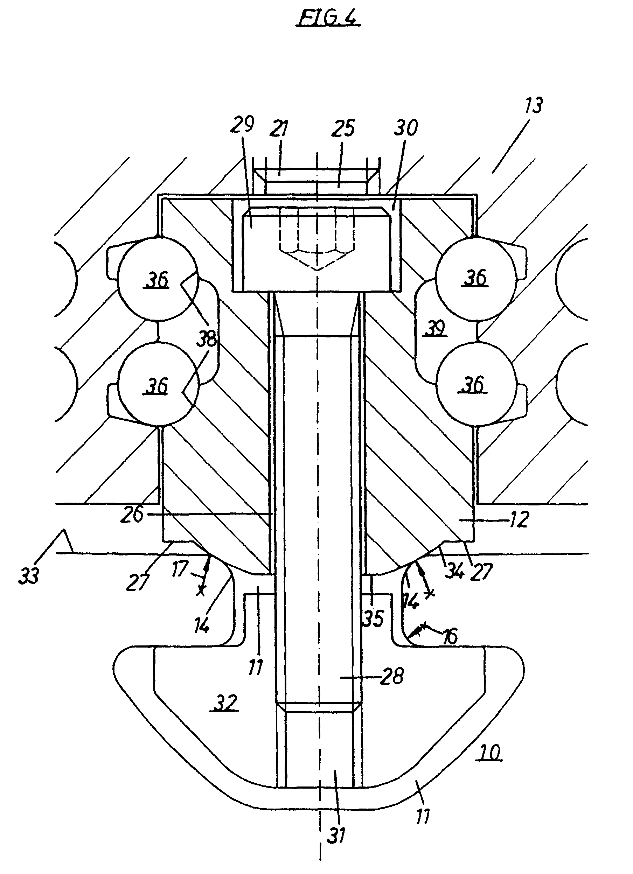

An jedem Träger 10 sind zwei einander parallele Führungsschienen 12 befestigt. Die Befestigung erfolgt gemäß Fig.4 mit Befestigungsschrauben 28. Eine Befestigungsschraube 28 durchgreift eine Befestigungsbohrung 26 der Führungsschiene 12. Der Kopf 29 der Befestigungsschraube 28 ist in einer Kopfbohrung der Führungsschiene 12 angeordnet und der Schaft der Befestigungsschraube 28 greift in eine Gewindebohrung 31 eines Nutensteins 32 ein, der in die Befestigungsnut 11 des Trägers 10 eingesetzt ist. Beim Festdrehen der Befestigungsschraube 28 wird die Führungsschiene 12 gegen den Träger 10 gezogen bzw. gegen dessen schienenseitige Außenwand 33 und insbesondere gegen die Trägerkanten 14, welche die Befestigungsnut 11 bilden.

Die Trägerkanten 14 sind abgerundet. Ihr Kantenradius 17 ist gemäß Fig.4 vergrößert, bezogen auf den Kantenradius 16, der dem Nutenstein 32 benachbart ist. Dementsprechend wird die Flächenpressung herabgesetzt.

Die Führungsschiene 12 ist im wesentlichen rechteckig ausgebildet. Sie ist trägerseitig ballig. Ihre Balligkeit 34 ist kreiszylindrisch und besitzt im Bereich der Befestigungsbohrung 26 eine Abflachung 35. Beidseitig der Balligkeit 34 ist jeweils eine Abstützfläche 27 vorhanden. Beide Abstützflächen 27 liegen in einer Ebene und können sich in nicht dargestellter Weise auf der Außenfläche 33 des Trägers 10 abstützen, wenn die Nut 14 entsprechend weit ist oder wenn der Träger 10 im Bereich der Kantenradien 17 entsprechend ausgenommen ist, so daß die Balligkeit 34 in diese Ausnehmung eintauchen kann und die Abstützflächen 27 zur Anlage an der Außenwand 33 kommen. In diesem speziellen Fall ist die Wirkung der Balligkeit 34 ausgeschaltet. Es wird jedoch die Möglichkeit eröffnet, die Führungsschiene 12 bei entsprechend großer Ausnehmung der Trägerkanten 14 horizontal zu verschieben, um die Justierung der Führungsschiene 12 in dieser Ebene torsionsfrei zu ermöglichen. Es ist auch möglich ein z.B. V-förmiges Unterlageteil zwischen der Führungsschiene und dem Träger zu verwenden.

Bei allen Ausführungsbeispielen ist die Führungsschiene 12 im Querschnitt im wesentlichen rechteckig. Jede Führungsschiene 12 trägt ein oder mehrere Führungslager 13, die als Geradführungslager ausgebildet sind. Insbesondere sind es Kugelumlauflager. Die Kugeln 36 laufen in Kugelumlaufkanälen 37 um, welche ebenfalls mit nicht dargestellten Kugeln gefüllt sind. Derartige Kugelumlauflager sind hochpräzise und für hohe Lasten geeignet. Sie ermöglichen eine hohe Positionierungsgenauigkeit. Die Kugeln 36 sind an Führungsbahnen 38 der Führungsschiene 12 abgestützt. Die Führungsbahnen 38 erstrecken sich in Längsrichtung der Führungsschiene 12, ebenso wie deren Längsausnehmung 39, welche Freiraum für die Kugeln 36 außerhalb der Laufbahnen 38 aber innerhalb der Führungsschiene 12 bietet.

Die Führungslager 13 sind mit Schlittenteilen 22 zusammengebaut. Sie besitzen hierzu gemäß Fig.4 eine Gewindebohrung 25, die eine Befestigungsschraube 21 aufzunehmen vermag. Mit einer solchen Befestigungsschraube 21 wird ein Führungslager an einem Schlittenteil 22 dadurch befestigt, daß der Kopf 23 in eine Nut 24 eines Schlittenteils 22 eingreift. Dieser Eingriff kann unterschiedlich ausgestaltet werden. Entweder greift der Kopf der Befestigungsschraube 21 in eine hinterschnittene Nut 24 ein, was in Fig.1 und oben in Fig.3 dargestellt wurde. Der Kopf 23 einer Befestigungsschraube 21 kann aber auch in einer beliebigen Nut 24 eines Schlittenteils angeordnet sein, was in der Fig.2 und in der Fig.3 rechts dargestellt wurde. In ersterem Fall ist der Schraubenkopf 23 verdeckt angeordnet und es muß eine nicht dargestellte Durchgriffsbohrung zur Betätigung des Schraubenkopfes z.B. mittels einer Innenmehrkantausnehmung 40 vorgesehen werden, vgl. Fig.3. Eine solche spezielle Durchgriffsbohrung ist für die Köpfe 23 der Schrauben in Fig.2 nicht erforderlich, da deren Innenmehrkantausnehmungen 40 frei zugänglich sind. Es muß jedoch die besondere Anordnung einer Durchgriffsbohrung für die Befestigungsschraube 21 möglich sein.

Die Schlittenteile 22 sind den jeweiligen Anforderungen entsprechend ausgebildet. Fig.1 zeigt als Schlittenteil 22 eine Platte, die dem Träger 10 entsprechend profiliert ist. Auch Fig.2 zeigt ein solches Schlittenteil 22. Die Trägerteile 10 der Fig.1, 2 und auch der Fig.3 sind jedoch unterschiedlich ausgebildet. Das Trägerteil 10 der Fig.1 hat auf einer einzigen Plattenwand zwei einander parallele Führungsschienen 12 und dementsprechend ist das Schlittenteil 22 senkrecht zur Darstellungsebene mit zwei Führungslagern 13 an jeder Führungsschiene 12 abgestützt. Jede Führungsschiene 12 liegt mit ihrer Balligkeit 34 auf dem Träger bzw. auf dessen Nutkanten 14 auf. Die Winkellage der Führungsschienen 12 in der Darstellungsebene der Fig.1 muß über die Länge des Trägers 10 unter zu Hilfenahme der Balligkeit 34 jeweils eingestellt werden. Das erfolgt, indem montageabschnittsweise die Leichtgängigkeit des Schlittens bzw. des Schlittenteils 22 überprüft wird. Ist die Leichtgängigkeit nicht im erforderlichen Maße gegeben, muß die Befestigungsschraube 28 mindestens einer Führungsschiene 12 gelöst und letztere so verdreht werden, daß die Leichtgängigkeit erreicht wird. Ist dies auch bei Einstellung beider Führungsschienen 12 nicht möglich, muß beispielsweise die vorbeschriebene, aber nicht dargestellte verdrehungsfreie horizontale Versetzung einer Führungsschiene 12 vorgenommen werden.

Das Schlittenteil 22 wird in Fig. 1 quer zur Kugelumlaufebene belastet. In dieser Richtung ist die Belastbarkeit des Führungslagers 13 etwas geringer, als radial, also als in der Ebene des Kugelumlaufs. Für höhere Lasten wird das Schlittenteil 22 daher gemäß Fig.2 gelagert. Hier ist ein im wesentlichen quadratischer Träger 10 vorgesehen, an dessen einander parallelen Außenwänden jeweils eine Führungsschiene 12 befestigt ist, wie dies zuvor beschrieben wurde. Die Führungslager 36 werden infolgedessen radial belastet, also in der Ebene ihrer Kugelumlaufbahnen. Es ist ein winkelförmiges Schlittenteil 22' erforderlich, welches mit dem plattenförmigen Schlittenteil 22 wie dargestellt verschraubt ist.

Fig.3 zeigt ebenfalls einen im Querschnitt quadratischen Träger 10, jedoch geringeren Querschnitts und mit zwei Führungsschienen 12, die über Eck angeordnet sind. Zwei im Winkel zueinander angeordnete Außenwände des Trägers 10 weisen also jeweils eine Führungsschiene 12 auf, die jeweils zwei senkrecht zur Darstellungsebene fluchtende Führungslager 13 haben. Die Führungslager 13 sind einerseits mit einem Schlittenteil 22 und andererseits mit einem im Winkel zum letzteren angeordneten Schlittenteil 22' verbunden, wobei zwischen beiden Schlittenteilen 22, 22' eine Verschraubung vorgesehen ist. Eine solche Ausführungsform ist bei mittlerer Belastbarkeit für hochgenaue Positionierungsaufgaben geeignet.

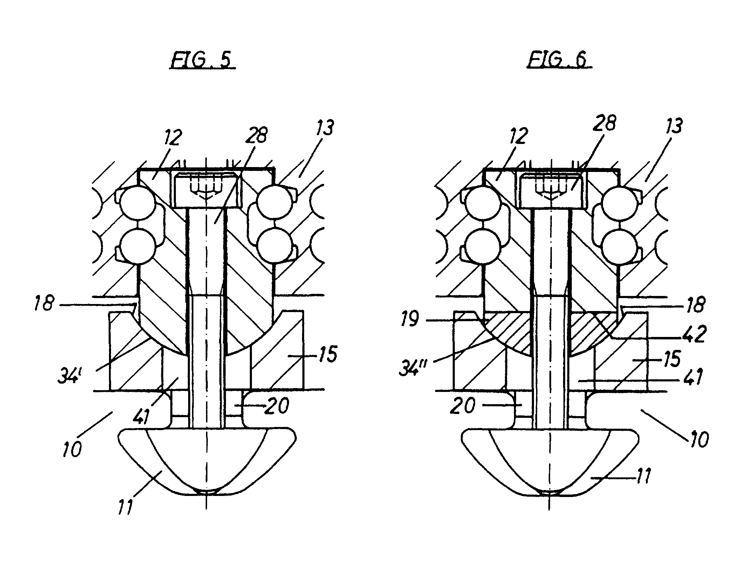

In allen Fällen ist vorgesehen, daß die Führungslager 33 mit einer Führungsleiste 13' in eine Nut des Schlittenteils 22 oder 22' eingreifen, vgl. Fig.1 links. Dieser Eingriff dient der Positionierungssicherheit beim Zusammenbau der Führungsschiene 13 mit dem Schlittenteil 22 bzw. 22'. Bei den vorbeschriebenen Ausführungsbeispielen der Führungsschiene 12 wurde diese jeweils direkt am Träger mit ihrer Balligkeit 34 abgestützt. Gemäß den Fig.5, 6 ist die Führungsschiene auch so auszubilden, das sie mit einer speziellen Balligkeit 34' bzw. 34'' indirekt an dem Träger 10 abgestützt werden kann. Die indirekte Abstützung erfolgt mit einem Zwischenlagerstück 15, welches die Befestigungsnut 11 überbrückt und.demgemäß trägerseitig großflächig auf der Außenwand des Trägers 10 aufliegen kann. Eine Kantenpressung im Bereich der Kanten 14 der Befestigungsnuten 11 wird infolgedessen vermieden. Das Zwischenlagerstück 15 ist jeweils mit einer weiten Durchgriffsbohrung 41 für die Befestigungsschraube 28 der Führungsleiste 12 versehen. Das Zwischenlagerstück 15 hat eine ballige Vertiefung 18, die kreiszylindrisch ausgebildet ist. Es ist eine rillenartige Vertiefung, die sich senkrecht zur Darstellungsebene über die gesamte Länge des Zwischenlagerstücks 15 erstreckt, so daß die Führungsschiene 12 entsprechend großflächig abgestützt werden kann. Infolgedessen werden hohe Flächenpressungen vermieden. Zur Positionierung des Zwischenlagerstücks 15 in Bezug auf den Träger 10 hat das Zwischenlagerstück 15 einen Nuteneingriffsvorsprung 20, der aus Positionierungsgründen zweckmäßigerweise ebenso lang ist, wie das Zwischenlagenstück 15 selbst.

Während die Zwischenlagerstücke 15 der Fig.5, 6 gleich ausgebildet sein können, sind die zugehörigen Führungsschienen 12 unterschiedlich ausgebildet. Gemäß Fig.5 ist die Führungsschiene 12 trägerseitig bzw. zwischenlagerstückseitig mit einer kreiszylindrischen Balligkeit 34' ausgebildet, die auf die ballige Vertiefung 18 abgestimmt ist. Gemäß Fig.6 ist die Führungsschiene 12 jedoch herkömmlicher Querschnittsgestaltung, nämlich trägerseitig mit einer ebenen Fläche 42 versehen, mit der sich die Führungsschiene 12 auf einer entsprechend ebenen Fläche einer separaten Abstützleiste 19 abstützt. Diese Abstützleiste 19 ist trägerseitig ballig ausgebildet und stützt sich am Zwischenlagerstück 15 bzw. an dessen balliger Vertiefung 18 ab. Die Relativlage zwischen der Führungsschiene 12 und der Abstützleiste 19 muß gesichert werden, was beispielsweise durch eine entsprechende Ausbildung der Verbindungsschraube 28 als Paßschraube geschehen kann. Auch eine formschlüssige Verbindung der Abstützleiste 19 mit der Führungsschiene 12 im Bereich von deren Abstützfläche 42 ist möglich.

## Patentansprüche

1. Führungsgestell, mit einem Befestigungsnuten (11) aufweisenden Träger (10), der mindestens eine an einer Befestigungsnut (11) befestigte trägerparallele und im wesentlichen rechteckige Führungsschiene (12) trägt, an der ein ein Schlittenteil (22) führendes Führungslager (13) abgestützt ist, **dadurch gekennzeichnet,** daß die im wesentlichen rechteckige Führungsschiene (12) auf die hinterschnittene Befestigungsnut (11) begrenzenden Trägerkanten (14) oder auf einem die hinterschnittene Befestigungsnut (11) überbrückenden Zwischenlagerstück (15) ballig abgestützt ist.

2. Führungsgestell nach Anspruch 1, **dadurch gekennzeichnet,** daß zwei oder mehr einander parallele Führungsschienen (12) vorhanden sind, die je ein Führungslager (13) aufweisen, die miteinander starr verbunden sind, und von denen mindestens eine über eine Balligkeit (34 bis 34'') an mindestens einem Träger (10) befestigt ist.

3. Führungsgestell nach Anspruch 1 oder 2, **dadurch gekennzeichnet,** daß die Führungsschiene (12) im Bereich der Trägerkanten (14) kreisförmig ballig ausgebildet ist.

4. Führungsgestell nach einem oder mehreren der Ansprüche 1 bis 3, **dadurch gekennzeichnet,** daß die Trägerkanten (14) mit im Vergleich zu anderen Kantenradien (16) des Trägers (10) vergrößerten Kantenradien (17) versehen sind.

5. Führungsgestell nach einem oder mehreren der Ansprüche 1 bis 4, **dadurch gekennzeichnet,** daß die Trägerkanten (14) konkav ausgebildet sind.

6. Führungsgestell nach einem oder mehreren der Ansprüche 1 bis 5, **dadurch gekennzeichnet,** daß die Führungsschiene (12) kreiszylindrisch ballig in einer entsprechend kreiszylindrisch balligen Vertiefung (18) des Zwischenlagerstücks (15) abgestützt ist.

7. Führungsgestell nach einem oder mehreren der Ansprüche 1 bis 6, **dadurch gekennzeichnet**, daß die Führungsschiene (12) trägerseitig eben ausgebildet ist und mit einer separaten Abstützleiste (19') ballig am Zwischenlagerstück (15) abgestützt ist.

8. Führungsgestell nach einem oder mehreren der Ansprüche 1 bis 7, **dadurch gekennzeichnet**, daß das Zwischenlagerstück (15) einen Nuteneingriffsvorsprung (20) aufweist.

9. Führungsgestell nach einem oder mehreren der Ansprüche 1 bis 8, **dadurch gekennzeichnet,** daß die Führungslager (13) als Geradführungslager ausgebildet sind.

10. Führungsgestell nach einem oder mehreren der Ansprüche 1 bis 9, **dadurch gekennzeichnet,** daß die Führungslager (13) mit Befestigungsschrauben (21) an sie starr verbindenden Schlittenteilen (22) befestigt sind, und daß die Köpfe (23) dieser Befestigungsschrauben (21) in Nuten (24) der Schlittenteile (22) eingreifen.

11. Führungsgestell nach einem oder mehreren der Ansprüche 1 bis 10, **dadurch gekennzeichnet**, daß die Führungslager (13) Befestigungsschrauben (21) aufnehmende Gewindebohrungen (25) aufweisen, die achsparallel zu Befestigungsbohrungen (26) der jeweils zugehörigen Führungschiene (12) angeordnet sind.

12. Führungsgestell nach einem oder mehreren der Ansprüche 1 bis 11, **dadurch gekennzeichnet,** daß die Führungsschiene (12) beidseitig ihrer balligen Ausbildung mit trägerflächenparallelen Abstützflächen (27) versehen ist.

## Claims

1. Guide frame comprising a carrier (10) which has a fastening groove (11) and which carries at least one guide rail (12) which is substantially rectangular and is fixed on the fastening groove (11) parallel to the carrier, and wherein a guide bearing (13) which guides a sliding part (22) is supported on the guide rail, **characterised in that** the substantially rectangular guide rail (12) is supported convexly on edges (14) of the carrier defining the undercut fastening groove (11) or on an intermediate bearing member (15) bridging the undercut fastening groove (11).

2. Guide frame according to claim 1, **characterised in that** two or more guide rails (12) are provided parallel to one another, each of which has a guide bearing (13), with the rails beings being connected rigidly to one another, and with at least one of the rails being fixed on at least one carrier (10) by way of a convex crown (34 to 34'').

3. Guide frame according to claim 1 or 2, **characterised in that** the guide rail (12) is formed with a circular convex crown in the region of the edges (14) of the carrier.

4. Guide frame according to one or more of claims 1 to 3, **characterised in that** the edges (14) of the carrier have radii (17) which are larger in comparison with other edge radii (16) of the carrier (10).

5. Guide frame according to one or more of claims 1 to 4, **characterised in that** the carrier edges (14) are concave.

6. Guide frame according to one or more of claims 1 to 5, **characterised in that** the guide rail (12) is of circular cylindrical crowned shape seating in a correspondingly circular cylindrical curved recess (18) in the intermediate bearing member (15).

7. Guide frame according to one or more of claims 1 to 6, **characterised in that** the guide rail (12) is flat on the carrier side and is supported by means of a separate support rib (19') resting in a crowned manner on the intermediate bearing member (15).

8. Guide frame according to one or more of claims 1 to 7, **characterised in that** the intermediate bearing member (15) has a groove-engaging projection (20).

9. Guide frame according to one or more of claims 1 to 8, **characterised in that** the guide bearings (13) are formed as linear guide bearings.

10. Guide frame according to one or more of claims 1 to 9, **characterised in that** the guide bearings (13) are secured by fixing screws (21) to sliding parts (22) so connecting them rigidly thereto, and that the heads (23) of these fixing screws (21) engage in grooves (24) of the sliding parts (22).

11. Guide frame according to one or more of claims 1 to 10, **characterised in that** the guide bearings (13) have threaded bores (25) to receive fixing screws (21), said threaded bores being arranged axially parallel to fixing bores (26) of the respective associated guide rails (12).

12. Guide frame according to one or more of claims 1 to 11, **characterised in that** the guide rail (12) is provided on both sides of its crowned area with support surfaces (27) which are parallel to the carrier surface.

## Revendications

1. Châssis de guidage comportant un support (10) présentant des rainures de fixation (11) et portant au moins un rail de guidage (12) qui est parallèle au support, qui est fixé à une rainure de fixation (11), qui est globalement rectangulaire et sur lequel s'appuie un palier-guide (13) guidant un élément formant coulisseau (22), **caractérisé** en ce que le rail de guidage globalement rectangulaire (12) s'appuie suivant une forme bombée sur les arêtes de support (14) qui délimitent la rainure de fixation contre-dépouillée (11), ou sur une pièce formant palier intermédiaire (15) qui couvre la rainure de fixation contre-dépouillée (11).

2. Châssis de guidage selon la revendication 1, **caractérisé** en ce qu'il est prévu deux rails de guidage parallèles (12), ou plus, qui comportent des paliers-guides respectifs (13) reliés rigidement entre eux, et dont l'un au moins est relié par l'intermédiaire d'une partie bombée (34 à 34") à au moins un support (10).

3. Châssis de guidage selon la revendication 1 ou 2, **caractérisé** en ce que le rail de guidage (12) a une forme bombée circulaire dans la zone des arêtes de support (14).

4. Châssis de guidage selon l'une au moins des revendications 1 à 3, **caractérisé** en ce que les arêtes de support (14) sont pourvues de rayons d'arête (17) qui sont plus grands que d'autres rayons d'arête (16) du support (10) .

5. Châssis selon l'une au moins des revendications 1 à 4, **caractérisé** en ce que les arêtes de support (14) ont une forme concave.

6. Châssis selon l'une au moins des revendications 1 à 5, **caractérisé** en ce que le rail de guidage (12) s'appuie suivant une forme bombée cylindrique circulaire dans un creux (18) de la pièce formant palier intermédiaire (15) doté d'une forme bombée cylindrique circulaire correspondante.

7. Châssis de guidage selon l'une au moins des revendications 1 à 6, **caractérisé** en ce que le rail de guidage (12) a une forme plane, côté support, et s'appuie suivant une forme bombée, avec un rebord d'-appui séparé (19), sur la pièce formant palier intermédiaire (15).

8. Châssis de guidage selon l'une au moins des revendications 1 à 7, **caractérisé** en ce que la pièce formant palier intermédiaire (15) présente une saillie de pénétration de rainure (20).

9. Châssis de guidage selon l'une au moins des revendications 1 à 8, **caractérisé** en ce que les paliers-guides (13) sont conçus comme des paliers-guides droits.

10. Châssis de guidage selon l'une au moins des revendications 1 à 9, **caractérisé** en ce que les paliers-guides (13) sont reliés à l'aide de vis de fixation (21) à des éléments formant coulisseaux (22) qui les relient rigidement, et en ce que les têtes (23) de ces vis de fixation (21) entrent dans des rainures (24) des éléments formant coulisseaux (22).

11. Châssis de guidage selon l'une au moins des revendications 1 à 10, **caractérisé** en ce que les paliers-guides (13) ont des perçages filetés (25) qui reçoivent des vis de fixation (21) et qui sont disposés parallèlement à l'axe de perçages de fixation (26) du rail de guidage (12) correspondant.

12. Châssis de guidage selon l'une au moins des revendications 1 à 11, **caractérisé** en ce que le rail de guidage (12) est pourvu, des deux côtés de sa forme bombée, de surfaces d'appui (27) parallèles à la surface du support.
